# EUROPÄISCHE PATENTSCHRIFT

(11) **EP 0 545 163 B1**
(45) Veröffentlichungstag und Bekanntmachung des Hinweises auf die Patenterteilung: **25.09.1996**
(21) Anmeldenummer: 92119757.0
(22) Anmeldetag: 20.11.1992
(51) Int. Cl.: C04B 33/13, C04B 32/00

(54) **Verfahren zur Herstellung von Ziegelformkörpern**
Process for the manufacturing of bricks
Procédé de préparation de briques

(30) Priorität: 02.12.1991 DE 4139642
(43) Veröffentlichungstag der Anmeldung: 09.06.1993
(73) Patentinhaber: SICOWA Verfahrenstechnik für Baustoffe GmbH & Co. KG, D-52072 Aachen (DE)
(72) Erfinder: Koslowski, Thomas, Dr., W-5100 Aachen (DE); Fandel, Thomas, Dipl.-Ing., W-5100 Aachen (DE)
(74) Vertreter: Sparing Röhl Henseler Patentanwälte

(56) Entgegenhaltungen:
- EP-A- 0 376 690
- DE-U- 8 706 326
- GB-A- 1 186 685
- US-A- 1 967 311
- PATENT ABSTRACTS OF JAPAN vol. 15, no. 436 (C-882)7. November 1991 & JP-A-31 83 669

## Beschreibung

Die Erfindung betrifft ein Verfahren zur Herstellung von Ziegelformkörpern durch Mischen einer Preßmasse aus einem körnigen, getemperte Tonminerale, puzzolanische Stoffe und Kalk enthaltenden Reststoff, einem Magerungsmittel und gegebenenfalls weiteren Zusätzen, aus der individuelle, eigenstabile Rohlinge durch Formpressen geformt werden, die getrocknet und gebrannt werden.

Üblicherweise werden Ziegelformkörper hergestellt, indem erdfeuchtes tonhaltiges Material aus natürlichen Resourcen mit einem Magerungsmittel und gegebenenfalls weiteren Zusätzen sowie Wasser zu einer strangpreßfähigen Masse verarbeitet wird. Der aus der Strangpresse austretende Strang wird dann in einzelne Rohlinge zerteilt, die gestapelt, getrocknet und schließlich gebrannt werden. Hierbei wird die Plastizität des aus Erdlagerstätten stammenden Minerals ausgenutzt. Allerdings werden hierdurch die natürlichen Resourcen nicht geschont. Beim Trocknen und Brennen tritt eine Trocken- bzw. Brennschwindung auf, die bei der Herstellung der Rohlinge berücksichtigt werden muß. Außerdem ist es schwierig, scharfe, rißfreie Kanten bei guter Maßhaltigkeit zu erzielen.

Andererseits fallen beispielsweise Braunkohlenaschen bei der Verstromung von Braunkohle in erheblichem Umfang an, die einen aus Tonmineralen bestehenden Anteil umfassen. Diese Tonminerale haben zwar den Vorteil, daß sie infolge der Verfeuerung der Braunkohle getempert sind, ihnen fehlt allerdings die zum Strangpressen notwendige Plastizität, abgesehen davon, daß sie mit anderen Reststoffen vermischt anfallen. Derartige Braunkohlenaschen werden derzeit größtenteils auf Deponien abgekippt und die darin enthaltenen Reststoffe nicht genutzt.

Aus der EP-A-0 087 474 ist ein Verfahren zur Herstellung von Ziegelformkörpern durch Mischen einer Preßmasse aus einem körnigen tonhaltigen Material mit einem Magerungsmittel und gegebenenfalls weiteren Zusätzen, aus der individuelle, eigenstabile Rohlinge durch Formpressen geformt werden, die getrocknet und gebrannt werden, bekannt. Hierbei wird somit ein Ton mit Kohlenasche gemagert, wobei größere Mengen an Asche nur einem sehr hochwertigen, äußerst plastischen Ton wie Kaolin, Montmorrilonit etc. zugesetzt werden können, da man in jedem Fall eine plastische Rohmasse erhalten will, die durch Spritzformen, Extrudieren oder Formpressen zu Formkörpern verarbeitet werden soll, so daß die Asche als Magerungsmittel eingesetzt wird. Dementsprechend sind auch die Preßdrücke, falls ein Formpressen angewendet wird, gering und die Wassermenge ist zur Erzielung der erforderlichen Konsistenz angepaßt. Hohe Drücke können bei einer plastischen Rohmischung nicht verwendet werden, da sonst Wasser und je nach Preßdruck auch körniges Material herausgedrückt wird und außerdem die Rohmischung zum Kleben an der Form neigt und dann nicht mehr fehlerfrei entformt werden kann.

Aus JP-A-3183669 ist es bekannt, als Hauptbestandteil Kraftwerksasche zusammen mit einem Zuschlag aus Sand oder Ton sowie zusammen mit einem organischen Bindemittel und relativ viel Wasser zu verwenden, um eine Masse herzustellen, die man in Formen gießt oder bei sehr niedrigen Drücken preßt, um die so hergestellten Formkörper später zu brennen. Hierbei wird die Standfestigkeit der Rohlinge durch das organische Bindemittel erzielt, bei dem es sich um Stärke od.dgl. handelt. Die erhaltenen Produkte sind porös.

Aufgabe der Erfindung ist es, ein Verfahren der eingangs genannten Art zu schaffen, das es ermöglicht, Reststoffe einzusetzen, um einerseits Deponieprobleme zu vermindern und andererseits natürliche Rohstoffe zu schonen.

Diese Aufgabe wird dadurch gelöst, daß ein bezüglich der getemperten Tonminerale sowie der puzzolanischen Stoffe und Kalk angereicherter Reststoff zur Herstellung einer erdfeuchten Preßmasse mit 5 bis 7 Gew.-% Feuchtigkeitsgehalt verwendet wird, die bei Drücken in der von 15 bis 20 N/mm² zu Rohlingen verpreßt wird.

Hierbei wird der Reststoff nicht als Magerungsmittel eingesetzt, sondern als Tonersatz überhaupt, d.h. daß die Ziegel ohne Ton und insbesondere auch ohne hochwertigen Ton nur aus dem Reststoff als tonhaltigem Material hergestellt werden.

Weitere Ausgestaltungen der Erfindung sind der nachfolgenden Beschreibung und den Unteransprüchen zu entnehmen.

Die Erfindung wird nachstehend im Zusammenhang mit den beigefügten Abbildungen näher erläutert.

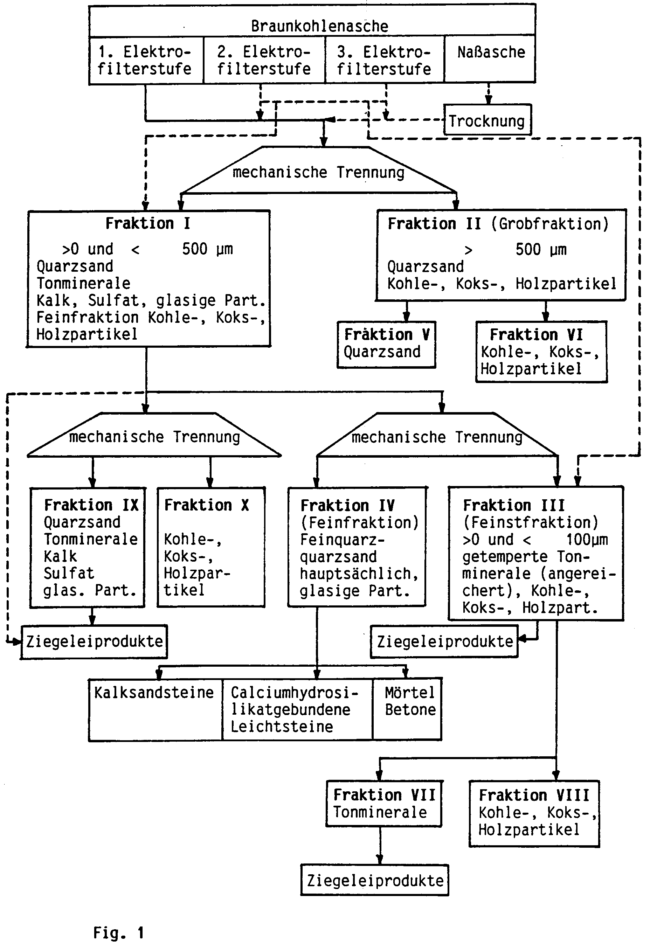

Fig. 1 zeigt ein Flußdiagramm bezüglich der Aufarbeitung von Braunkohlenasche.

Fig. 2 zeigt ein Flußdiagramm bezüglich der Verwertung betimmter Fraktionen aus dem Flußdiagramm von Fig. 1.

Braunkohlenasche fällt allgemein größtenteils als trockene Elektrofilterasche und zu einem geringen Teil als Naßasche an. Elektrofilterasche aus der ersten Elektrofilterstufe (etwa 90 Gew.-% der Elektrofilterasche) enthält vor allem auch die grobkörnigeren Aschebestandteile, während die Elektrofilterasche einer zweiten und gegebenenfalls einer dritten Elektrofilterstufe sehr feinteilig ist.

Elektrofilterasche enthält Quarzsand, getemperte Tonminerale, die im allgemeinen beide zusammen etwa 70 bis 90 Gew.-% ausmachen, sowie kalkhaltige, sulfatische, sonstige aluminatische und ferritische Anteile sowie glasige Partikel zusammen mit Kohle-, Koks- und Holzpartikeln.

Die Fein- und Feinstanteile mit einer Korngrößenobergrenze etwa < 500 µm, vorzugsweise etwa < 300 µm, insbesondere etwa < 200-250 µm werden in einem ersten Schritt als Fraktion I mechanisch von einer Fraktion II mit Teilchen einer entsprechend größeren Korngröße enthaltend vor allem gröberen Quarzsand und gröbere Kohle-, Koks- und Holzpartikel abgetrennt, insbesondere abgesiebt und enthalten infolge der Trennung im Bereich bis zu der angegebenen Korngröße vor allem Feinquarzsand und tonmineralische sowie sonstige aluminatische, ferritische, kalkhaltige, sulfatische und glasige Bestandteile, außerdem eine Feinfraktion von Kohle-, Koks- und Holzpartikeln. Insbesondere wird nur die Braunkohlenflugasche aus einer ersten Elektrofilterstufe der Trennung unterworfen und die dabei abgetrennte Fraktion I gegebenenfalls zusammen mit der in weiteren Elektrofilterstufen anfallenden Flugasche, die im allgemeinen im wesentlichen vor allem aus tonmineralischen Bestandteilen besteht, verarbeitet.

Die Fraktion I wird einer weiteren mechanischen Trennung unterworfen, die sich danach richtet, welche Verwertung der dann erhaltenen Fraktionen geplant ist.

Im allgemeinen erfolgt eine weitere mechanische Trennung etwa durch Sieben in eine Fraktion III (Feinstfraktion) mit einer Korngrößenobergrenze von etwa < 100 µm, insbesondere etwa < 40-70 µm und eine Fraktion IV (Feinfraktion) mit einer Korngrößenuntergrenze etwa > 100 µm, insbesondere etwa > 40-70 µm. Die Fraktion III enthält hauptsächlich getemperte Tonminerale sowie in geringen Mengen Feinstanteile an Kohle-, Koks- und Holzpartikeln, die gegebenenfalls zum Erhalt einer Fraktion VII praktisch aus getemperten Tonmineralen und einer Fraktion VIII aus brennbaren Reststoffen abgetrennt werden können, und läßt sich daher als solche oder in Form der Fraktion VII für Ziegeleiprodukte verwenden.

Gegebenenfalls kann man die Elektrofilterasche der zweiten und eventuell weiteren Elektrofilterstufen der Fraktion III beimischen und mit dieser weiter verarbeiten, da diese hauptsächlich feinstteilige getemperte Tonminerale enthalten.

Die Fraktion IV, die hauptsächlich entsprechenden Quarzsand und einen geringen Anteil der übrigen Substanzen der Fraktion I enthält, aber im wesentlichen frei von Tonmineralen ist, eignet sich beispielsweise zur Verwendung bei der Herstellung von calciumhydrosilikatgebundenen Baustoffen wie Kalksandsteine, Kalksandleichtsteine, Porenbetonsteine o.dgl. oder als Feinsand für Mörtel, Putze Betone u.dgl. oder aber als Gießereiformsand.

Von der verbleibenden Fraktion II wird das brennbare Material insbesondere durch Sichten, vorzugsweise Windsichten, abgetrennt, es können aber auch andere Trennverfahren, die zweckmäßigerweise den großen Unterschied im spezifischen Geicht zwischen den Kohle-, Koks- und Holzpartikeln und den anderen Bestandteilen der Fraktion II ausnutzen, verwendet werden. Die so erhaltene Fraktion V besteht im wesentlichen aus Quarzfeinsand, der bis ca. 75 Gew.-% der Braunkohlenflugasche ausmachen kann. Die weitere anfallende Fraktion VI besteht aus brennbarem Material und kann in den Verbrennungskreislauf zurückgeführt werden.

Die Trennung der Fraktion I kann aber auch beispielsweise durch Sichten derart vorgenommen werden, daß im wesentlichen die Kohle-, Koks-und Holzpartikel als beispielsweise verfeuerbare Fraktion X entfernt werden und eine Fraktion IX übrig bleibt, die im wesentlichen aus Quarzsand und Tonmineralen besteht. Die Fraktion IX kann ebenfalls für Ziegeleiprodukte eingesetzt werden.

Zur Herstellung von Ziegeleiprodukten eignen sich insbesondere die Fraktionen I bzw. IX, die Fraktionen III und VII sind jedoch nicht ausgeschlossen sind.

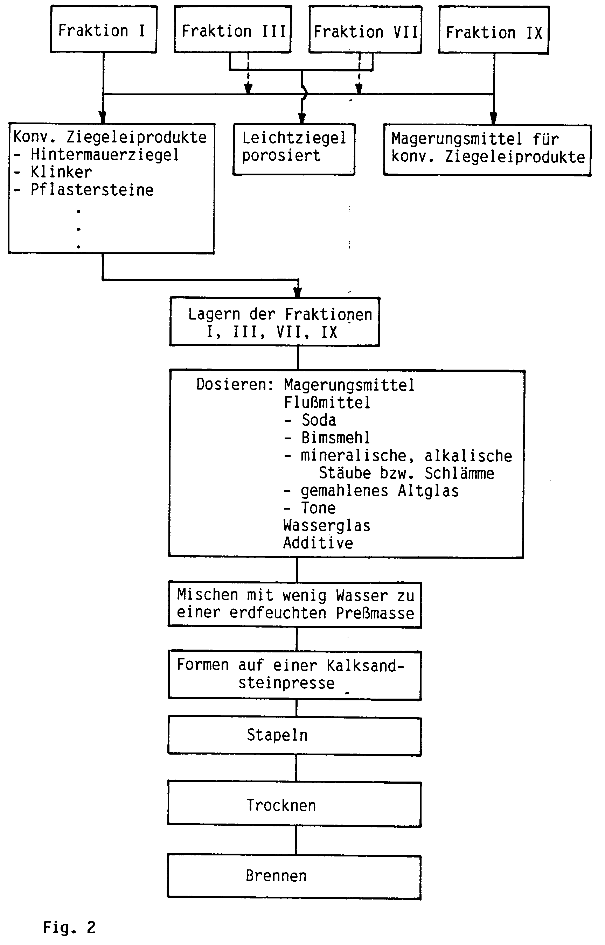

Rohlinge für Ziegeleiprodukte wie Hintermauerziegel, Klinker, Pflastersteine u.dgl. werden entsprechend Fig. 2 nach Dosieren und Mischen der eingesetzten Fraktionen mit Magerungsmittel und weiteren Zusätzen zur Herstellung einer erdfeuchten Rohmischung und Verpressen von dieser hergestellt.

Als Magerungsmittel kommen Sande, etwa Quarzsand aus anderen Fraktionen der Braunkohlenasche, Schlacken o.dgl. infrage.

Zweckmäßig ist der Zusatz von Flußmittel (deren Alkaligehalt eine geringere notwendige Brenntemperatur bedingt), etwa 1 bis 2 Gew.-% Soda, bis etwa 10 Gew.-% Bimsmehl, und gegebenenfalls bis etwa 10 Gew.-% Tone, aber auch insbesondere alkalireiche mineralische Stäube bzw. Schlämme (z.B. Rotschlamm aus der Aluminiumgewinnung, Schleifschlämme) bis zu etwa 10 Gew.-% sowie vor allem auch bis etwa 10 Gew.-% gemahlenes Altglas infrage. Die Flußmittel können auch in Mischung eingesetzt werden.

Wasser wird derart zugesetzt, daß sich eine Feuchte von etwa 5 bis 7 Gew.-% Feuchte, d.h. eine erdfeuchte Rohmasse ergibt, die dann portionsweise auf einer Presse wie einer Kalksandsteinpresse, d.h. mit Preßdrücken in der Größenordnung von 15 bis 20 N/mm² und mehr, zu eigenstabilen Rohlingen verpreßt wird. Die Rohlinge werden dann gebrannt. Hierbei können Ziegel wie Kalksandsteine als Vollsteine oder als Kammersteine mit entsprechenden Lochmuster versehen werden.

Vor dem Brennen werden die Rohlinge üblicherweise getrocknet. Hierbei tragen puzzolanische Anteile der Braunkohlenasche, die in der erdfeuchten Umgebung mit dem ebenfalls in geringen Mengen vorhandenen Kalk reagieren, dazu bei, daß der gepreßte Rohling seine ihm durch den Preßvorgang verliehene Eigenstabilität beibehält und beim Trocknen nicht zerfällt. Bei zu geringen Anteilen an entsprechenden puzzolanischen Substanzen im Reststoff kann gegebenenfalls ein anorganisches Klebemittel, etwa Wasserglas z.B. in einer Menge von 1 bis 2 Gew.-%, zugesetzt werden. Jedoch ist im allgemeinen kein Klebemittel notwendig.

Vor allem bietet sich hier zusätzlich die Möglichkeit, Altglas zu verwerten, das entsprechend gemahlen eingesetzt werden kann.

Wegen fehlender Plastizität der getemperten Tonminerale der Braunkohlenflugasche tritt bei derartigen Ziegeleiprodukten im Gegensatz zu Produkten, die aus ungetemperten Tonen hergestellt werden, vorteilhafterweise nur ein sehr geringes Schrumpfen auf, d.h. Brenn- und Trockenschwindung sind sehr gering, es ergeben sich scharfe Kanten und eine gute Maßhaltigkeit. Eine puzzolanische Reaktion von entsprechenden Aschenbestandteilen in Anwesenheit des Anmachwassers trägt zur Standfestigkeit der Rohlinge und zur Ausbildung scharfer Kanten bei.

Die Naßasche kann nach Trocknung zusammen mit der Flugasche den vorgesehenen mechanischen Trennungen unterworfen werden.

Als geeignetes tonhaltiges Material kommt nicht nur Braunkohlenasche bzw. eine trockene Fraktion hiervon infrage, sondern jeder vorwiegend aus Tonmineralen bestehender, verziegelbarer Reststoff, insbesondere eine vorwiegend aus getemperten Tonmineralen bestehende, trockene Fraktion einer Asche.

## Patentansprüche

1. Verfahren zur Herstellung von Ziegelformkörpern durch Mischen einer Preßmasse aus einem körnigen, getemperte Tonminerale, puzzolanische Stoffe und Kalk enthaltenden Reststoff, einem Magerungsmittel, Wasser und gegebenenfalls weiteren Zusätzen, aus der individuelle, eigenstabile Rohlinge durch Formpressen geformt werden, die getrockent und gebrannt werden, dadurch **gekennzeichnet**, daß ein bezüglich der getemperten Tonminerale sowie der puzzolanischen Stoffe und Kalk angereicherter Reststoff zur Herstellung einer erdfeuchten Preßmasse mit 5 bis 7 Gew.-% Feuchtigkeitsgehalt verwendet wird, die bei Drücken von 15 bis 20 N/mm² zu Rohlingen verpreßt wird.

2. Verfahren nach Anspruch 1, dadurch gekennzeichnet, daß zum Verpressen eine Kalksandsteinpresse verwendet wird.

3. Verfahren nach Anspruch 1 oder 2, dadurch gekennzeichnet, daß als Magerungsmittel gemahlenes Altglas verwendet wird.

4. Verfahren nach Anspruch 3, dadurch gekennzeichnet, daß bis etwa 10 Gew.-% gemahlenes Altglas eingesetzt wird.

5. Verfahren nach einem der Ansprüche 1 bis 4, dadurch gekennzeichnet, daß die Preßmasse unter Zugabe von bis zu 10 Gew.-% alkalireicher, mineralischer Stäube und/oder Schlämme hergestellt wird.

6. Verfahren nach einem der Ansprüche 1 bis 5, dadurch gekennzeichnet, daß als Magerungsmittel aus Braunkohlenasche gewonnener Quarzsand eingesetzt wird.

7. Verfahren nach einem der Ansprüche 1 bis 6, dadurch gekennzeichnet, daß als getemperte Tonminerale zumindest teilweise Braunkohlenflugasche der zweiten und weiteren Elektrofilterstufen verwendet wird.

8. Verfahren nach einem der Ansprüche 1 bis 6, dadurch gekennzeichnet, daß als getemperte Tonminerale eine Feinfraktion insbesondere mit Partikeln < 200-250 µm und/oder eine Feinstfraktion insbesondere mit Partikeln < 40-70 µm von Braunkohlenflugasche verwendet wird.

9. Verfahren nach Ansprch 8, dadurch gekennzeichnet, daß die Fein- und/oder Feinstfraktion von Kohle-, Koks- und Holzpartikeln befreit wird.

## Claims

1. A process for the manufacture of brick-type moulded bodies by mixing a moulding compound consisting of granular recyclings containing baked clay minerals, pozzolanic substances and lime and of a lean material, water and possibly other additives in order to make individual stable brick-type moulded bodies by pressing, which are dried and baked, characterised in that recyclings enriched with the baked clay minerals, the pozzolanic substances and lime are used for producing an earth-moist moulding compound having a 5 to 7 percent by weight humidity, moulded at pressures of 15 to 20 N/mm² in order to obtain brick-type moulded bodies.

2. A process according to Claim 1, characterised in that a lime-sandstone press is used for pressing.

3. A process according to Claims 1 or 2, characterised in that milled recycled glass is used as a lean material.

4. A process according to Claim 3, characterised in that up to approximately 10 percent by weight of milled recycled glass is used.

5. A process according to one of Claims 1 to 4, characterised in that a moulding compound is produced by addition of up to 10 percent by weight of mineral dusts and/or muds which are rich in alkaline substances.

6. A process according to one of Claims 1 to 5, characterised in that silica sand from brown coal ash is used as a lean material.

7. A process according to Claims 1 to 6, characterised in that at least partly brown coal fly ash from a second and other electric filter stages is used as baked clay minerals.

8. A process according to one of Claims 1 to 6, characterised in that a fine fraction, in particular consisting of particles of <200-250 µm and/or a finest fraction, in particular consisting of particles of <40-70 µm of brown coal fly ash, is used as baked clay minerals.

9. A process according to Claim 8, characterised in that coal, coke and wood particles are removed from the fine and/or finest fraction.

## Revendications

1. Procédé de fabrication d'objets moulés en argile cuite par mélange d'une matière à mouler à base de matières résiduaires granuleuses contenant des produits minéraux argileux recuits, des matières pouzzolaniques et de la chaux, avec un agent d'amaigrissement et éventuellement d'autres additifs, à partir de laquelle des ébauches individuelles stables sont réalisées par compression dans un moule, puis séchées et cuites, caractérisé en ce que, pour ce qui est des produits minéraux argileux recuits avec les matières pouzzolaniques et la chaux, on utilise des matières résiduaires enrichies pour la fabrication d'une matière à mouler à humidité naturelle de 5 à 7 % en poids de teneur humide, qui est pressée en ébauches sous une pression comprise dans une plage de 15 à 20 N/mm².

2. Procédé selon la revendication 1, caractérisé en ce qu'on utilise pour la compression une presse à briques silico-calcaires.

3. Procédé selon la revendication 1 ou 2, caractérisé en ce que l'on utilise comme agent d'amaigrissement du verre perdu broyé.

4. Procédé selon la revendication 3, caractérisé en ce que l'on ajoute jusqu'à environ 10 % en poids de verre perdu broyé.

5. Procédé selon l'une quelconque des revendications 1 à 4, caractérisé en ce que la matière à mouler est réalisée par ajout jusqu'à environ 10 % en poids de poussières et/ou boues minérales riches en alcalis.

6. Procédé selon l'une quelconque des revendications 1 à 5, caractérisé en ce qu'on ajoute comme agent d'amaigrissement du sable silicieux provenant des cendres de lignite.

7. Procédé selon l'une quelconque des revendications 1 à 6, caractérisé en ce qu'on utilise en tant que produits minéraux argileux recuits, au moins en partie des cendres volantes de lignite provenant du deuxième étage et des étages suivants d'électro-filtres.

8. Procédé selon l'une quelconque des revendications 1 à 6, caractérisé en ce qu'on utilise en tant que produits minéraux argileux recuits, une fraction de fines des cendres volantes de lignite, en particulier avec des particules inférieures à 200-250 µm, et/ou une fraction de plus fines desdites cendres, en particulier avec des particules inférieures à 40-70 µm.

9. Procédé selon la revendication 8, caractérisé en ce que la fraction de fines et/ou la fraction de plus fines est débarrassée des particules de charbon, de coke et de bois.
